Europäisches Patentamt

(19) European Patent Office

Office européen des brevets

(11) Veröffentlichungsnummer: **0 200 776**
**B1**

(12) **EUROPÄISCHE PATENTSCHRIFT**

(45) Veröffentlichungstag der Patentschrift:
**18.01.89**

(51) Int. Cl.⁴: **C 02 F 1/28, C 02 F 1/00**

(21) Anmeldenummer: **85905794.5**

(22) Anmeldetag: **26.10.85**

(86) Internationale Anmeldenummer:
**PCT/EP 85/00569**

(87) Internationale Veröffentlichungsnummer:
**WO 86/02631 (09.05.86** Gazette **86/10)**

(54) **LÖSUNGSVERFAHREN UND LÖSUNGSMITTEL FÜR SCHWERLÖSLICHE KARBONATE.**

(30) Priorität: **26.10.84 DE 3439263**

(43) Veröffentlichungstag der Anmeldung:
**12.11.86 Patentblatt 86/46**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DE-A- 1 937 617**
**DE-A- 3 233 783**
**FR-A- 358 991**
**FR-A- 1 094 373**
**US-A- 3 547 818**
**US-A- 3 633 672**
**US-A- 3 704 750**

(73) Patentinhaber: **UHT, Umwelt- und Hygienetechnik GmbH, Vogelruth 15, D-4800 Bielefeld 14 (DE)**

(72) Erfinder: **RITTER, Günter, Saarlandstrasse 10, D-4980 Bünde (DE)**

(74) Vertreter: **Hanewinkel, Lorenz, Dipl.-Phys., Patentanwalt Ferrariweg 17a, D-4790 Paderborn (DE)**

## Beschreibung

Die Erfindung betrifft ein Verfahren zur Auflösung von einem im wesentlichen Kalziumkarbonat enthaltenden Niederschlages oder einer solchen Ablagerung, insbes. von Kesselstein, durch eine Lewissäure in einer Konzentration von 10 bis 1000 mMol/l, der eine Protonensäure oder teildeprotonierte, mindestens ein Proton liefernde, weitere Säure, wobei diese weitere Säure eine Dissoziationsstufe mit pK-Werten grösser 1 aufweist, zugesetzt ist.

Es ist aus US-A-3 547 817 ein Verfahren bekannt, bei dem ein wasserlösliches mehrwertiges Metallsalz und eine Organo-Phosphonsäure, z.B. die Nitrilotris-Methylenphosphonsäure, in Wasser gelöst wurden und diese Lösung in einer Verdünnung von 1:11 000 zur Auflösung eines Kalziumsulfatniederschlages oder in einer Verdünnung von über 1 × 200 000 zur Verhinderung der Entstehung von Niederschlägen aus anorganischen Verunreinigungen enthaltenden Brauchwasser und Erdöl benutzt wurde.

Die angegebenen niedrigen Konzentrationen des Mittels sind für eine praktische Verwendung als Lösungsmittel von Kesselstein ungeeignet. In hohen Konzentrationen sind nämlich die Organo-Phosphonsäuren insbesondere die Nitrilotris-Methylenphosphonsäure agressiv und von physiologisch bedenklicher Toxizität.

In Wässern mit höheren Karbonathärten und Gesamthärten kommt es bei $CO_2$-Verlusten an die Atmosphäre zu Übersättigung an Kalziumkarbonat und Magnesiumkarbonat und infolgedessen mehr oder weniger rasch zur Ausfällung von hauptsächlich $CaCO_3$, daneben $CaCO_3 \cdot MgCO_3$, $MgCO_3$ und anderen Beimengungen. Diese Ausfällungen können in Form von Trübungen, Partikeln, häufig aber in Gestalt harter Ablagerungen und Krusten aus sogenanntem Kesselstein, die mechanisch nur schwer entfernbar sind, auftreten. Eine typische Kesselsteinzusammensetzung besteht aus: $CaCO_3$ über 95%, $MgCO_3$ unter 5%, Phosphat in Spuren, Eisen in Spuren. Charakteristisch für derartige Kesselstein-Niederschläge ist, dass sie $CaCO_3$ überwiegend enthalten.

Mit steigender Wassertemperatur und mit zunehmender Karbonat- und Gesamthärte des Wassers wird die Kesselsteinausscheidung grösser. Kesselsteinablagerungen können in vielfacher Weise, beispielsweise durch die Verminderung der Wärmeübertragung, die Verengung von Rohrquerschnitten, die Verkrustung von Pumpen, Ventilen, Heizelementen usw., die Verringerung der Transparenz und des ästetischen Aussehens von Glas-, Kunststoff- bzw. Metallgefässen, funktionsmindernd in Erscheinung treten und zu gravierenden Systemstörungen führen.

Ein wichtiges Beispiel betroffener Geräte stellen Kaffee- und Teeautomaten im Haushalt dar. Es ist daher unumgänglich, periodisch derartige Geräte und Anlagen von Kesselsteinablagerungen zu befreien.

Da Kalziumkarbonat der Hauptbestandteil von Kesselstein ist, können alle folgenden Erklärungen und Ausführungen an $CaCO_3$ allein erfolgen. Sinngemäss das Gleiche gilt dann auch für Dolomitkrusten, $CaCO_3 \cdot MgCO_3$ und $MgCO_3$-Beimengungen, bzw. andere Karbonate, z.B. basisches Kupfer- oder Zink-Karbonat.

Bekannt ist, dass man $CaCO_3$ mehr oder weniger rasch durch Einwirkung von Säuren auflösen kann, z.B. durch eine starke anorganische Säure, wie HCl, $HNO_3$, eine mittelstarke anorganische Säure, wie $H_3PO_4$, eine mittelstarke bis schwächere organische Säure, wie HCOOH, $CH_3COOH$, eine schwache organische Säure, wie Zitronensäure oder Weinsäure. Auch Gemische aus verschiedenen Säuren, z.B. $H_3PO_4$ und Zitronensäure, werden eingesetzt.

Eine oft erwünschte, rasche $CaCO_3$-Auflösung wird lediglich durch starke anorganische Säuren erreicht. Die Auflösungsgeschwindigkeit nimmt mit fallender Säurestärke rasch ab. Selbst bei mehrbasischen Säuren bleibt die Reaktionsgeschwindigkeit klein, da in der Regel nur ein Proton, $H^+$-Ion, pro Säuremolekül, und zwar zur Hauptsache das $H^+$-Ion der ersten Dissoziationsstufe, an der Reaktion beteiligt ist.

Praktische Anwendungs- und Modellversuche zeigten, dass lediglich Säuren mit ersten Dissoziationskonstanten pk kleiner 1,5-2 noch mit ausreichender, praktikabler Geschwindigkeit mit $CaCO_3$ reagieren. Daher führen nur starke Mineralsäuren in entsprechender Konzentration, z.B. HCl oder $HNO_3$, zu befriedigenden $CaCO_3$-Auflösungszeiten. Schon mittelstarke Säuren mit ersten Dissoziationsstufen im Bereich pk gleich 2 bis 4, z.B. sogar Phosphorsäure, reagieren erheblich langsamer bzw. erfordern unverhältnismässig grosse Säureüberschüsse, d.h. hohe Säureanwendungskonzentrationen. Säuren mit $pk_1$-Werten zwischen 4 und 5 reagieren sehr langsam und lassen sich auch durch überhöhte Anwendungskonzentrationen nur ungenügend in ihrer Auflösungsgeschwindigkeit steigern. Noch schwächere Säuren mit $pk_1$-Werten grösser 5 reagieren schliesslich überhaupt nicht mehr mit praktisch verwertbarer Geschwindigkeit. Diese Säurestärkebetrachtungen gelten nicht nur für die erste Dissoziationsstufen (wo sie die höchste Reaktivitätsstufe beliebiger Säuren darstellen), sondern für alle Dissoziationsstufen mehrprotoniger Säuren.

Die nach dem Stand der Technik zweckmässig eingesetzten Säuren oder Gemische starker und mittelstarker Säuren bringen anwendungstechnische Nachteile mit sich, und sogar die mittelstarken Säuren zeigen: eine hohe Korrosion, einen scharfen, unangenehmen schleimhautreizenden Geruch, eine physiologisch bedenkliche Toxizität, eine Aggressivität, die Haut- und Schleimhautreizung verursacht. Sie sind umweltbelastend und bedürfen spezieller Sicherheitsvorkehrungen bei der Anwendung, da die Anwendung nicht ungefährlich ist, und gesicherter Verpackungen. Schwache Säuren zeigen eine sehr langsame, ungenügende Auflösung von $CaCO_3$, unter Bildung von trüben Lösungen, sowie eine Bildung von Sekundärniederschlägen schwerlöslicher Kalziumsalze, und es findet eine nur teilweise Ausnutzung der Säurekapazität, z.B. 25-50% statt, wodurch höhere Konzentrationen und grössere Einsatzmengen erforderlich sind.

Alle Versuche mit schwachen und daher wenig korrodierenden organischen Säuren zeigen, dass diese sehr langsam, in völlig ungenügendem Ausmass und oft unter Bildung trüber Lösungen und von Sekundärniederschlägen mit CaCO₃-Granulat reagieren. Die erheblich reaktionsfähigeren starken Säuren zeigen die für mittelstarke Säuren genannten Nachteile noch in verstärktem Masse. Auch Versuche mit schwachen kationischen Aquosäuren, z.B. mit $[Al(H_2O)_6]^{3+}$ oder $[Fe(H_2O)_6]^{3+}$, zeigen nur sehr langsame Reaktionen. Auch andere kationische Aquosäuren mit 3- oder 4-wertigen Kationen reagieren mit CaCO₃ bzw. Kesselstein nur minimal; ebensowenig reagieren andere Lewissäuren.

Es ist aus Thermal Engineering 29, 1982, S. 504-505 bekannt, Aluminiumchloridlösungen zur Lösung von Kalkablagerungen zu verwenden. Es zeigt sich eine Lösungsgeschwindigkeit, die wesentlich geringer als die von Salzsäure, jedoch höher als die einer organischen, aliphatischen, niedermolekularen Säure war. Die Korrosivität des Aluminiumchlorids lag unter der der organischen Säure.

Die Aufgabenstellung ist, eine Verfahren und Mittel zur Auflösung von Kesselstein mit folgenden Eigenschaften zu benennen: Es soll eine hohe Auflösungsgeschwindigkeit von Kesselstein und kesselsteinartigen CaCO₃-Formen erbringen, eine geringe Korrosionswirkung zeigen, kaum ätzend sein, die Auflösung unter Bildung klarer Lösungen und unter Vermeidung von Sekundärniederschlägen erbringen, eine einfache Handhabung bieten und ungefährlich in der Anwendung sein.

Die Lösung der Aufgabe besteht darin, dass in einem Verfahren der eingangs erwähnten Art diese weitere Säure in einem Molverhältnis der Säure zur Lewissäure von 2:1 bis 3:1 zugesetzt ist und die Lewissäure eine Lösung von mindestens einem Salz einer Säure mit Kationen eines 3-wertigen Hauptgruppenelementes oder eines 4-wertigen Hauptgruppenelementes oder eines Übergangselementes ist und als die weitere Säure eine oder mehrere anorganische Säuren, nämlich Borsäure oder Phosphorsäure oder deren teildeprotonierte Stufen, oder organische Säuren, nämlich Ameisensäure, Oxalsäure, Propionsäure, Glycosäure, Glyoxylsäure, Milchsäure, Malonsäure, Maleinsäure, Bernsteinsäure, L⁺Weinsäure, Zitronensäure, Apfelsäure, Trauben säure, Zuckersäuren, wie Mono-Dicarbonsäuren von Triosen, Tetrosen, Pentosen, Hexosen, Heptosen oder deren biopolymere Formen, ausserdem Polyhydroxy-Polyaldehydepolycarbonsäuren, alpha-Aminocarbonsäuren, Polyaminopolycarbonsäuren, wie Nitrilotriessigsäure und teildeprotonierte Stufen in EDTA- oder DTPA-Stufen, 2-Phosphonobutan-1,2,-4-Tricarbonsäure, 1-Hydroxyäthan-1,1-Diphosphonsäure in einer Gesamtkonzentration von 100 bis 500 mMol/l zugesetzt wird.

Weitere vorteilhafte Ausgestaltungen des Verfahrens und geeigneter Mittel sind in den Unter- und Nebenansprüchen angegeben.

Völlig überraschend verhielten sich Gemische aus schwachen bis mittelstarken Säuren und Salzen von 3- und 4-wertigen Kationen, speziell $Al^{3+}$- und $Fe^{3+}$-Salze, in ihrem Reaktionsverhalten gegenüber CaCO₃ so unterschiedlich zu den Komponenten, dass völlig neuartige Reaktionseigenschaften entstanden. Wichtig ist dabei die Stöchiometrie der Mischung. Besonders wirksam erwiesen sich Gemische mit Molverhältnissen von Säure zu 3- bzw. 4-wertigen Metallionen von 2:1 bis 3:1.

Obwohl die Komponenten der Mischung allein völlig ungenügendes Reaktionsverhalten mit CaCO₃ zeigten, ist in der Mischung eine signifikante, auffällige Verbesserung der Reaktivität gegenüber CaCO₃ mit folgenden typischen Unterschieden feststellbar. Es zeigt sich eine mehrfache, etwa 2- bis 4fache Auflösungsgeschwindigkeit, eine 2- und mehrfache Säurekapazität im Vergleich zu der Summe der einzelnen Lösungskapazitäten, der Komponenten des Mittels; denn pro Säuremolekül werden mehr als ein $H^+$-Ion (typisch 2-4) ausgenutzt, und es entstanden klare niederschlagsfreie Lösungen. Die Korrosion ist um Grössenordnungen kleiner als bei den in der Reaktivität vergleichbaren starken Säuren, und darüberhinaus ist sie überraschenderweise sogar geringer als bei den reinen Komponenten des Mittels, wenn diese jeweils in entsprechender Konzentration und bis zur gleichen Auflösungsmenge des Kesselsteines angewendet werden.

Die stark erhöhte Azidität der aktivierten Säuren bewirkt anscheinend eine Erhöhung des Dissoziationsgrades und eine Erhöhung der aktuellen $H^+$-Ionenkonzentration. Überraschend dabei ist jedoch, dass die $H^+$-Ionenkonzentration dabei nicht soweit erhöht wird, dass die aggressiven, gefährlichen Verhältnisse der sehr starken Mineralsäuren (alpha = 1) erreicht werden. Vielmehr findet eine mittlere Erhöhung statt, die etwa zwischen nicht aktivierten und Mineralsäuren liegt, wobei im Unterschied zu den starken Mineralsäuren, bei denen die extrem hohe Wasserstoffionenkonzentration rasch abnimmt, ein mittelhohes Konzentrationsniveau durch ständige Nachdissoziation und durch weitgehende Gleichgewichtseinstellung auch mit folgenden Dissoziationsstufen lange erhalten bleibt. Bei den reinen Säuren hingegen ergibt sich eine viel niedrigere Wasserstoffionenkonzentration.

Es zeigte sich, dass es für das Verfahren gleichgültig ist, ob die Komponenten vor der Reaktion zusammengebracht wurden und gemeinsam dosiert wurden oder einzeln dem Reaktionsgefäss mit dem CaCO₃-Granulat zugesetzt wurden. Immer wurde die erhöhte Reaktionsfähigkeit beobachtet, da die ursprünglich schwache bis mittelstarke Säure durch stöchiometrische Zusätze von 3- bzw. 4-wertigen Metallsalzen, inbesondere $AlCl_3 \cdot 6H_2O$ oder $FeCl_3 \cdot 6H_2O$, stark aktiviert wurden.

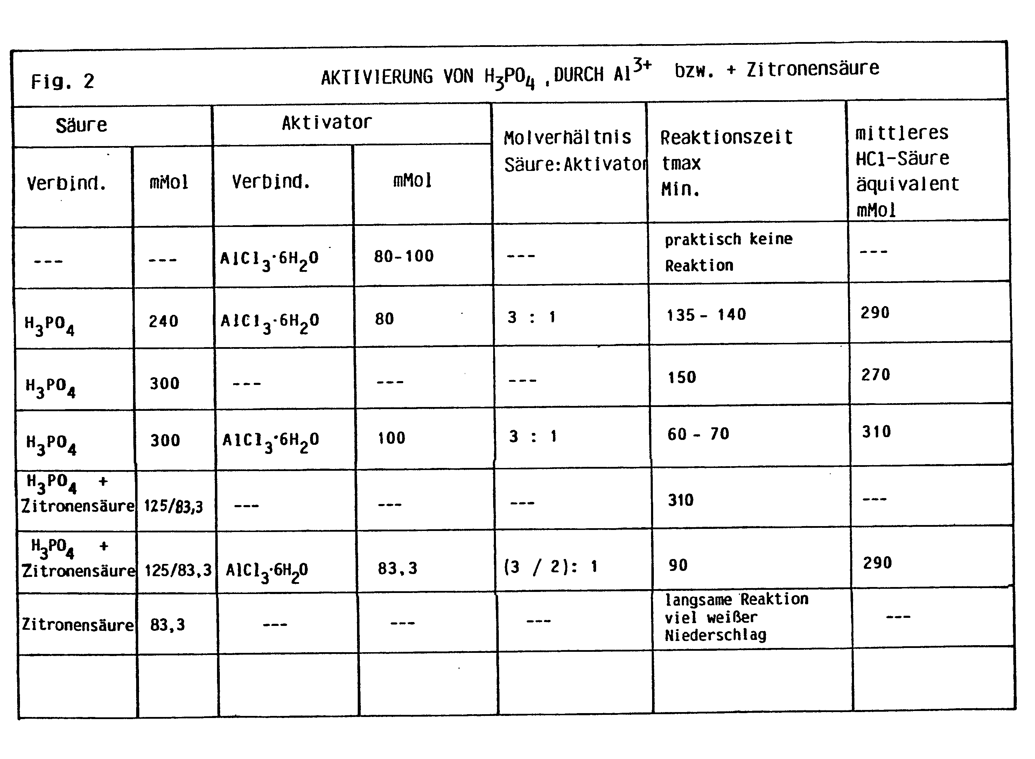

Diese Säureaktivierung durch Aluminiumchloridhydrat und Eisentrichloridhydrat wurde an folgenden Säuren untersucht und in den Fig. 2 bis 9 dargestellt, und zwar für eine anorganische Säure, die Phosphorsäure, für organische Carbonsäuren, die Oxalsäure, die L-Weinsäure und die Zitronensäure, für eine Phosphoncarbonsäure, die Phosphonbutantricarbonsäure und für eine Phosphonsäure, die 1-Hydroxy-äthan-1,1-diphosphonsäure.

Aus den Beispielen ist abzuleiten, dass eine schwache bis mittelstarke Säure durch Zusatz einer Lösung eines Salzes aus 3- oder 4-wertigen Metallionen und einem, vorzugsweise anorganischen, Säuretest einer starken Säure im Molverhältnis 2:1 bis 3:1 aktiviert wird.

Einschränkungen für die praktische Anwendbarkeit dieses neuartigen Aktivierungsprinzips ergeben sich lediglich dann, wenn die Säure, auch unter Anwesenheit des Aktivators, oder dieser selbst schwerlösliche Verbindungen mit dem zu lösenden Stoff, insbesondere mit dem Kalzium des Kesselsteines, bilden, auch wenn diese Stoffe nur intermediär auftreten. Es zeigt sich überraschend, dass auch solche Säuren zum Einsatz gebracht werden können, die ohne Anwesenheit des Aktivators sehr schwerlösliche Kalziumsalze oder Niederschläge bilden, z.B. Oxalsäure, da der Aktivator die Niederschlagsbildung verhindert.

Neben den gezeigten Beispielen ist es dem Fachmann möglich, weitere Säuren auf ihre Eignung zur Aktivierung durch Zusatz von Lewissäuren für bestimmte Anwendungen, die auch über das Lösen von Kesselstein hinausgehen können, zu prüfen. Geeignet sind eine oder mehrere anorganische Säuren, nämlich Borsäure oder Phosphorsäure oder deren teildeprotonierte Stufen, oder organische Säuren, nämlich Ameisensäure, Oxalsäure, Propionsäure, Glycolsäure, Glyoxylsäure, Milchsäure, Malonsäure, Maleinsäure, Bernsteinsäure, $L^+$Weinsäure, Zitronensäure, Apfelsäure, Traubensäure, Zuckersäuren, wie wie Mono-Dicarbonsäuren von Triosen, Tetrosen, Pentosen, Hexosen, Heptosen oder deren biopolymere Formen, ausserdem Polyhydroxy-Polyaldehydepolycarbonsäuren, alpha-Aminocarbonsäuren, Polyaminopolycarbonsäuren, wie Nitrilotriessigsäure und teildeprotonierte Stufen in EDTA- oder DTPA-Stufen, 2-Phosphonbutan-1,2,4-Tricarbonsäure, 1-Hydroxyäthan-1,1-Diphosphonsäure.

Eine ausgeprägte Aktivierung der aufgezählten Säuren erbringen dreifach und vierfach geladene Kationen, das sind die $M^{3+}$-Kationen der Hauptgruppenelemente, insbesondere des Aluminiums, der Übergangselemente, insbesondere des Eisens, und die der Lanthaniden und Actiniden, weiterhin die $M^{4+}$-Kationen der Hauptgruppenelemente, der Übergangselemente und der Lanthaniden und Actiniden.

Unter Haushaltbedingungen sind verschärfend folgende Eigenschaften wichtig: Das Mittel soll nichttoxisch, physiologisch unbedenklich, unschädlich für die Umwelt sein oder eine gute Abbaubarkeit zu umweltverträglichen Folgeprodukten besitzen, wenig geruchsbelästigend sein; seine Dämpfe und Reaktionsdämpfe sollen nicht schleimhautreizend sein, und die Anwendung soll ohne Sicherheitsvorkehrungen erfolgen können.

Durch die hier genannten Zusatzbedingungen ergeben sich Einschränkungen bei der fachmännischen Auswahl der Komponenten des Mittels, jedoch ergibt sich eine grössere Anzahl Säuren und Aktivatoren, von denen eine Auswahl in den Unteransprüchen dargestellt ist. Insbesondere sind die Zitronen- und die L-Weinsäure zu nennen, die in Kombination mit Aluminium- oder Eisenchlorid ein preisgünstiges Mittel für Haushaltsanwendungen ergeben.

Die Anwendung der durch Zusatz von Lewis-Säuren aktivierten Säuren, ist in den Versuchsreihen, insbesondere geeignet zur Entfernung von Kesselsteinkrusten und Verkalkungen in Haushaltskaffee- und -teeautomaten untersucht worden. Da grundsätzlich beliebige Kesselsteinkrusten, $CaCO_3$-Niederschläge und Ablagerungen anderer Karbonate mit den aktivierten Säuren aufgelöst und damit beseitigt werden können, sind folgende Anwendungsbereiche zu sehen: Die Beseitigung von kalkhaltigen Ablagerungen in Rohrleitungen, die Entfernung von Kesselstein aus Heiz- und Kühlsystemen, die Reinigung von Heiz- und Reaktionskesseln, die Verwendungen als saurer Industriereiniger, Haushaltreiniger, sanitäre Reiniger, Haushaltskalkentferner, saures Lösungsmittel in Industrie und Labor.

Die Art der Applikation der Säure und des Aktivators ist für die Aktivierung nicht massgebend. Daher gibt es eine Vielzahl von Applikationsformen. So gibt es Zweiphasen-, Zweikomponenten- oder Mehrkomponentenprodukte. Bei ihnen erfolgt die Einbringung von Säure und Aktivator zu dem Reaktionsort getrennt in Form von wässrigen oder nichtwässrigen Lösungen, lösungsmittelfreien, festen Formen, z.B. als Pulver, in gepresster Form als Tabletten, Granulat, Pellets, Extrudate, Agglomerate.

Bevorzugt sind jedoch die Einphasenmischungen der Komponenten in wässriger oder nichtwässriger Lösung, oder vorzugsweise in fester Mischung oder auch als Paste oder als Suspension, z.B. einer festen Lewissäure in einer flüssigen schwachen oder mittelstarken Säure.

Zur Ausnutzung der festgestellten korrosionsmindernden Wirkung des Aktivators wird bevorzugt der Einsatz der Anionen vorgesehen, der dem Material, das von Kesselstein zu reinigen ist, oder das mit dem Lösemittel längere Zeit in Berührung kommt und besonders korrosionsempfindlich oder funktionswichtig ist, entspricht, also für Al-Behälter, ein $Al^{3+}$-Aktivator, für Fe-Behälter ein $Fe^{3+}$-Aktivator und für Cr-Oberflächen ein $Cr^{3+}$-Aktivator.

Neben dem Einsatz von einer Säure mit einem Aktivator ist es anwendungstechnisch oder kostenmässig oft günstiger, zwei und mehr Säuren mit einem Aktivator, eine Säure mit mehreren Aktivatoren und zwei und mehr Säuren mit zwei und mehr Aktivatoren unter Berücksichtigung der Summenmolverhältnisse von 2:1 bis 3:1 zu kombinieren.

Die Kombination verschiedener Aktivatoren kann insbesondere zur Korrosionsminderung gegenüber Metallegierungen, durch geeignete Auswahl von Art und Mischungsverhältnis der Aktivierungskationen sinnvoll angewendet werden. Mit der Aktivierung kann daher gleichzeitig eine zusätzliche Stabilisierung von Metalloberflächen aus dem Aktivierungsmetall und damit zusätzlich Korrosionsminderung erzielt werden.

In den Figuren 1 bis 8 sind Versuchsergebnisse zusammengestellt.

Fig. 1 zeigt eine Kurve der Bestimmung von Salzsäureäquivalenten der Reaktivität gegen Kesselsteingranulat;

Fig. 2 zeigt die Aktivierung von Phosphorsäure auch kombiniert mit Zitronensäure mit Aluminiumchlorid;

Fig. 3 zeigt die Aktivierung von 2-Phosphono-Butan-1,2,4-Tricarbonsäure durch Aluminium- bzw. Eisenchlorid;

Fig. 4 zeigt die Aktivierung von L-Weinsäure bzw. Oxalsäure mit Aluminium- bzw. Eisenchlorid;

Fig. 5 zeigt die Aktivierung von Zitronensäure durch Aluminium- bzw. Eisenchlorid;

Fig. 6 zeigt die Aktivierung von 1-Hydroxyäthan-1,1-Diphosphonsäure durch Aluminum- bzw. Eisenchlorid;

Fig. 7 zeigt Korrosionsversuchsergebnisse von Zitronensäure, Aluminiumchlorid und Mischungen auf Aluminium.

Fig. 8 zeigt die Lösungsaktivität von Aluminiumchlorid für Kesselstein bei diversen Temperaturen.

Die Versuche wurden mit einem $CaCO_3$-Granulat und zusätzlich zum Teil mit zerkleinertem, gesiebtem Kesselsteingranulat durchgeführt. Untersucht wurde die Reaktivität von $Al^{3+}$ und/oder $Fe^{3+}$-aktivierten Säuren mit diesem $CaCO_3$-Granulat.

Durchführung und Versuche: In 500 ml Wasser (Leitungswasser von mittlerer Härte) wurden die Säure in einer Molmenge, die ungefähr 400-600 mVal $H^+$-Ionen äquivalent war, und der Aktivator in Form von $AlCl_3 \cdot 6H_2O$ oder $FeCl_3 \cdot 6H_2O$ in dem gewünschten Molverhältnis (2:1 bis 3:1) aufgelöst. Jeweils zu der klaren Lösung wurden 10,00 g $CaCO_3$-Granulat (ca. 100 mMol entsprechen 200 mVal) in Form von ca. 1 mm grossen Körnchen zugesetzt. Zur Beurteilung und zum Vergleich der Reaktivität der nichtaktivierten und unterschiedlich aktivierten Säuren wurde die Zeit bis zum Ende der sichtbaren $CO_2$-Entwicklung gemessen, bei der das Granulat aufgelöst war.

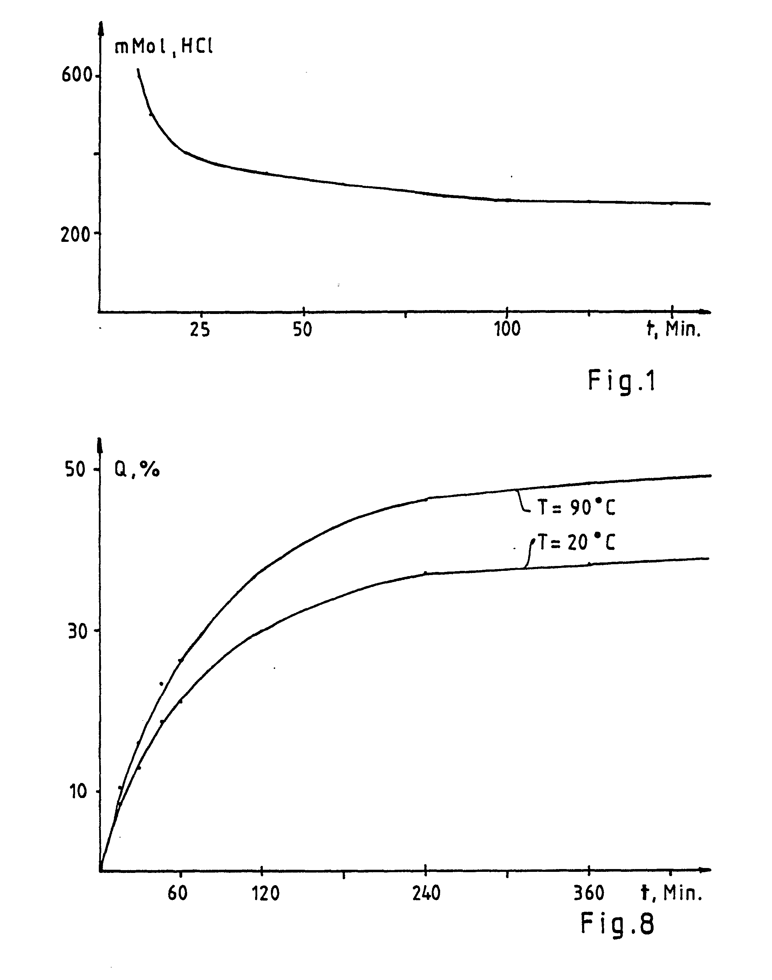

Der experimentelle Zusammenhang zwischen der Raktionszeit und der $H^+$-Ionenkonzentration wurde eine Versuchsreihe mit verschiedenen Salzsäurekonzentraten ermittelt. In der aus diesen Resultaten gewonnenen Eichkurve Fig. 1 können die gemessenen Reaktionszeiten mit mittleren $H^+$-Aktivitäten, ausgedrückt in mVal HCl pro 500 ml korreliert werden.

Figur 2 zeigt, dass Phosphorsäure durch einen Zusatz von Aluminiumchloride so stark aktiviert werden kann, dass Kesselsteingranulat in weniger als der halben Zeit gelöst wird, die die gleichkonzentrierte Säure allein benötigt. Die zugesetzte Aluminiumchloridlösung allein zeigt nur eine geringe Lösungsreaktion, vgl. Fig. 8.

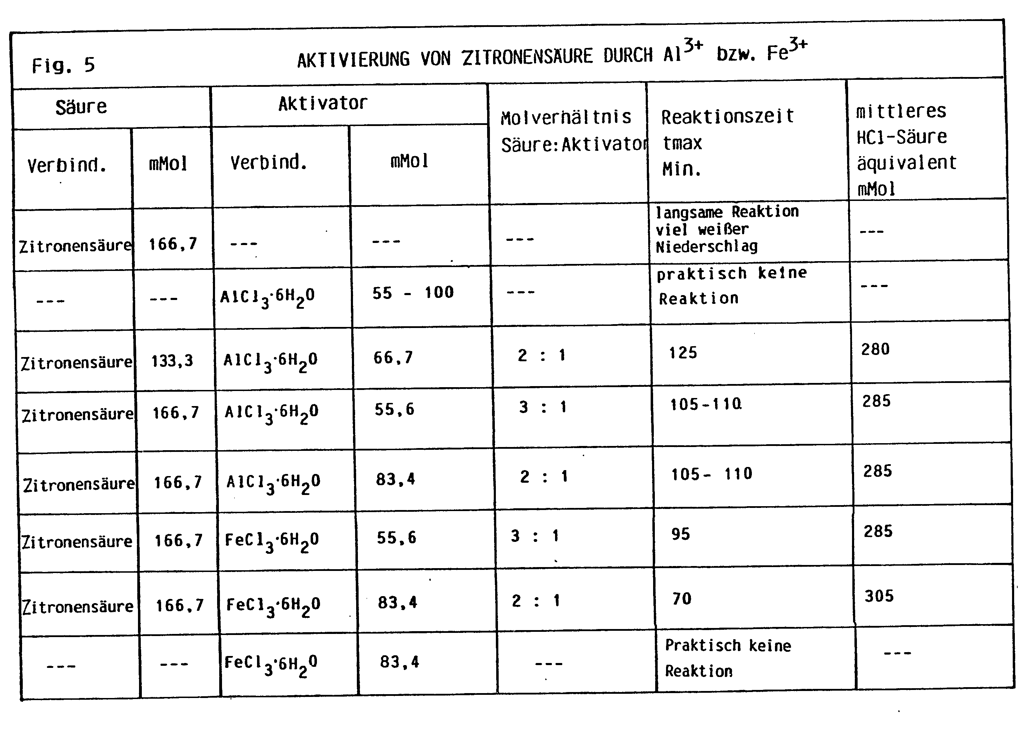

Weiterhin ist auch im Vergleich zu Fig. 5 zu sehen, dass auch Mischungen von Säuren, nämlich der Phosphor- und der Zitronensäure in ähnlicher Weise auf die über 3fache Reaktionsgeschwindigkeit aktivierbar sind; die Säuremischung allein entspricht in ihrer Reaktivität jedoch nur etwa der Summe der Komponentenreaktivität.

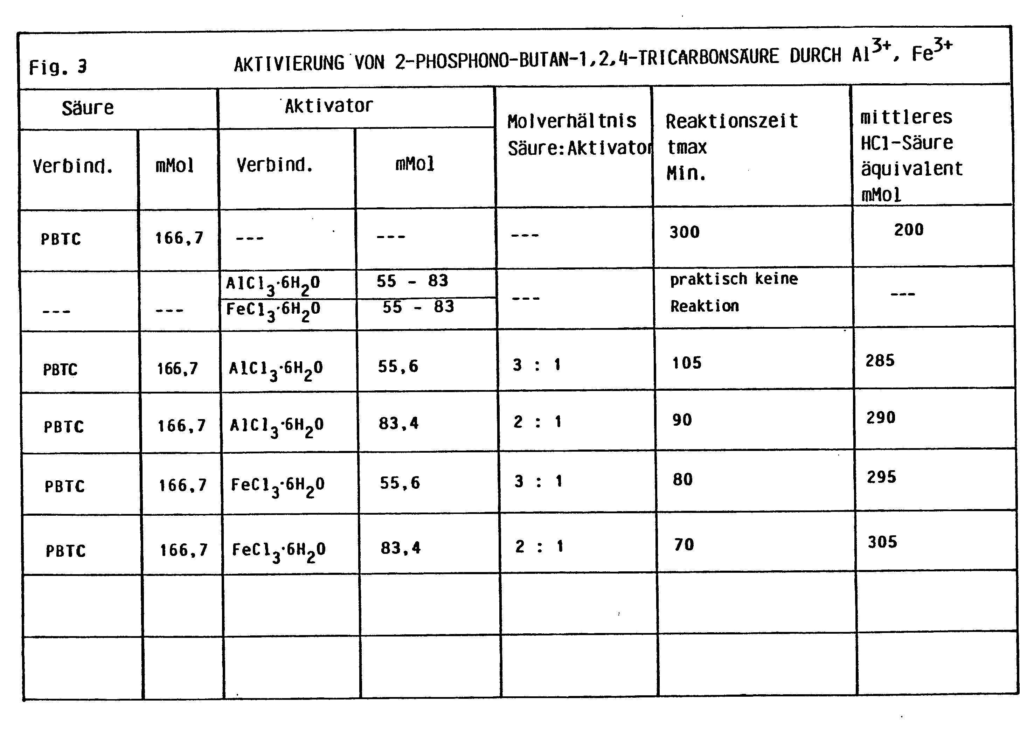

Fig. 3 zeigt die Steigerung der Reaktionsgeschwindigkeit von Diphosphonbutantricarbonsäure durch Aluminium- bzw. Eisenchlorid auf das mehr als 3- bis 4fache der Säure allein.

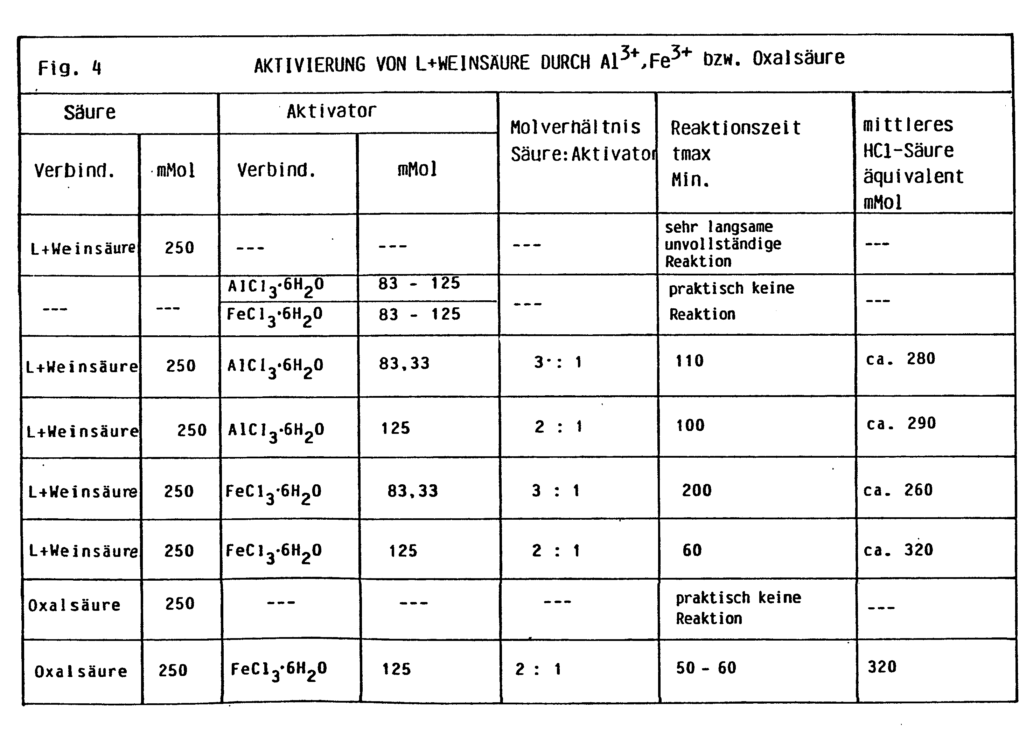

Fig. 4 zeigt die Aktivierung von L-Weinsäure, die allein mit dem Granulat nur eine unvollständige Reaktion unter Niederschlagbildung zeigt, mit Aluminiumchlorid bzw. Eisenchlorid in den Molverhältnissen 3:1 bzw. 2:1, wobei durch eine erhöhte Zugabe von Aktivator das Salz-Säureäquivalent sich erhöhte und zwar bei Aluminiumchlorid geringfügig, bei Eisenchlorid jedoch überproportional, so dass dabei eine ähnliche Reaktivität wie bei der Oxalsäure erreicht wurde. Weiterhin ist zu entnehmen, dass Oxalsäure und Eisenchloridlösung das Kesselsteingranulat einzeln praktisch nicht lösen, jedoch eine Mischung derselben, einem HCl-Säureäquivalent von 320 mMol entsprechend, mit dem Kesselstein reagiert.

Fig. 5 zeigt wie für die Zitronensäure, die mit dem Granulat nur langsam unter Ausscheidung eines Niederschlages reagiert eine Aktivierung durch Aluminiumchlorid erreicht wird, die jedoch bei der Steigerung der Molverhältnisse von 3:1 auf 2:1 keine weitere Erhöhung der Säureaktivität über ein Salzsäureäquivalent von 285 mMol brachte. Eine Aktivierung mit Eisenchlorid zeigt eine weitere Steigerung der Reaktivität bei einem Molverhältnis von 2:1 bis auf ein Salzsäureäquivalent von 305 mMol.

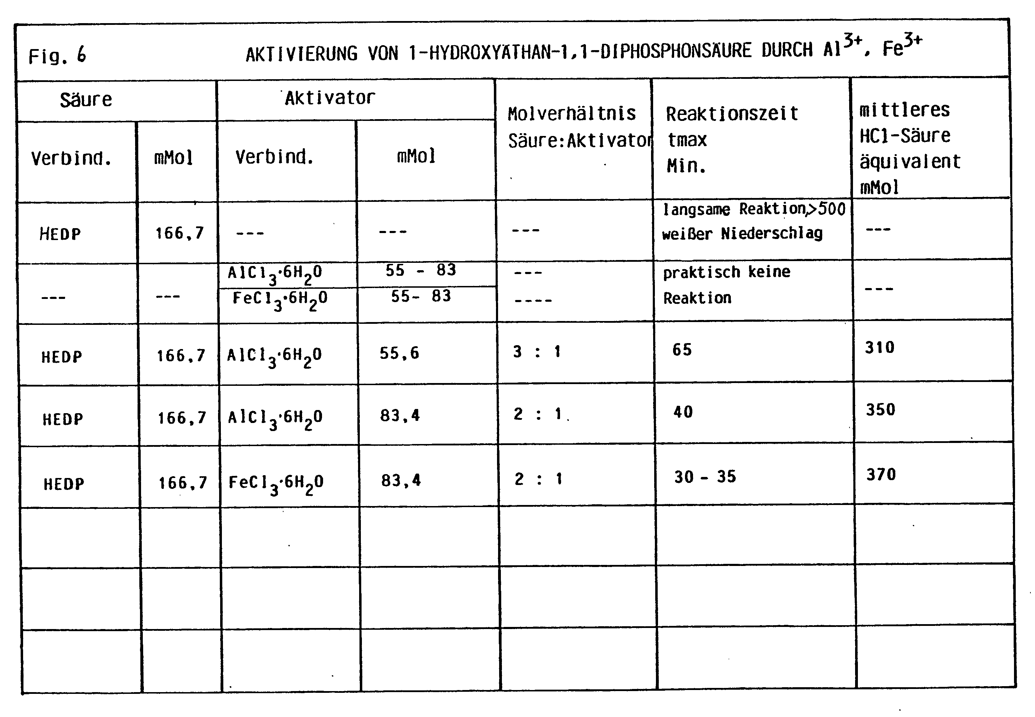

Fig. 6 zeigt, dass eine ausserordentliche Steigerung der Aktivität von 1-Hydroxyäthan-1,1Biphosphonsäure erreicht wird, die allein nur sehr langsam und unter Entstehung von Niederschlag reagiert, durch Aluminium- und insbesondere Eisenchlorid. Die günstigste Kombination mit Eisenchlorid in Molverhältnis von 2 zu 1 ergab nur 30 bis 35 Min. Reaktionszeit; das ist etwa die Hälfte der günstigsten Zeiten aus den Beispielen nach den Fig. 2 bis 6.

Eine weitere Versuchsreihe wurde mit 103 mMol der 2-Phosphonbutan-1,2,4-tricarbonsäure. 34,3 bzw. 51,5 mMol des Aluminiumhexahydrats bzw. mit Mischungen derselben durchgeführt. Anstelle von 10 g $CaCO_3$-Granulat werden hier jedoch 20 g $CaCO_3$-Granulat entsprechend 200 mMol entsprechend 400 mVal eingesetzt. Nach 12 h Reaktionszeit, d.h. lange nach Ende der sichtbaren Reaktion mit $CO_2$-Entwicklung, wurde die Menge an nicht gelöstem $CaCO_3$-Granulat bestimmt. Es zeigt sich, dass die Säure allein 6,33 g gelöst hatte, das Aluminiumchlorid 4,18 g bzw. 5,94 g löste und die Mischungen 10,95 g bzw. 12,98 g lösten. Somit haben die Mischungen für Kesselsteinauflösung eine höhere Säurekapazität als die Komponenten einzeln; sie sind in dieser Hinsicht also vorteilhaft.

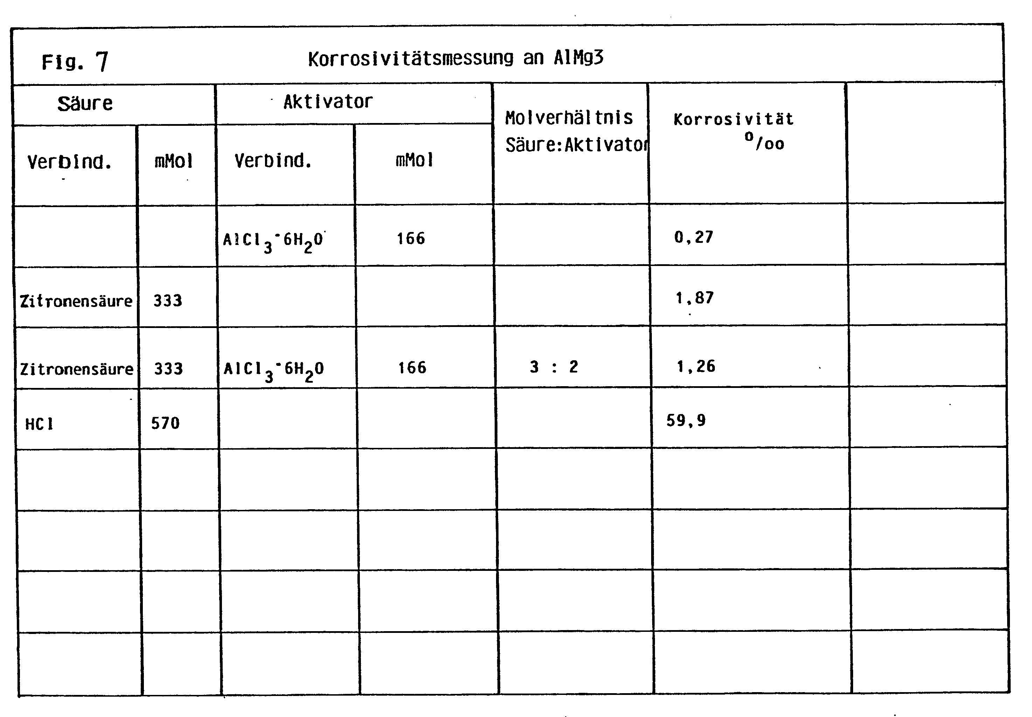

Da die meisten Durchlauferhitzer in Kaffee- und Teeautomaten für den Haushalt aus Aluminium-Legierungen bestehen, wurde eine vergleichbare Legierung in einer Versuchsreihe zur Abschätzung der Säurekorrosivität eingesetzt. In Fig. 7 sind die Ergebnisse zusammengestellt. Es zeigt sich überraschend dass, obwohl die Säureaktivität der Mischung von Zitronensäure mit Aluminiumchlorid, gem. Fig. 5, Zl. 4-6 wesentlich gesteigert ist, deren Korrosivität jedoch geringer als die der Zitronensäure allein ist. Darüberhinaus ergibt sich eine überproportionale Verringerung der Korrosion in der praktischen Anwendung, wenn man berücksichtigt, dass die Verweilzeit der Mischung bis zur Auflösung einer vorhandenen Menge Kesselsteines wesentlich kürzer ist als bei der Verwendung der Komponenten allein. Da sich z.B. aus den Versuchen zur Lösung von Kesselstein bei erhöhter Temperatur eine mehr als 10fach kürzere Zeit für die Mischung im Vergleich zur Aluminiumchloridlösung ergab, erbringt die Mischung, trotz der, auf gleiche Verweilzeiten bezogen, etwa 5 mal geringeren Korrosivität der Aluminiumchloridlösung, nur den halben Korrosionsabtrag in der verkürzten notwendigen Anwendungszeit.

Für Versuchsdurchführung wurde bei 90 Grad C ein Streifen von poliertem, entfettetem AlMg3-Blech

von 1 mm Stärke, 100 mm Breite und 70 mm Länge 10 Min. jeweils in eine Lösung von Zitronensäure, von Aluminiumhexahydratchlorid, einer Mischung der Komponenten und vergleichsweise von Salzsäure gehängt und dabei die Lösung gerührt. Die jeweils abgelöste Aluminiummenge wurde dann bestimmt.

Eine weitere Versuchsreihe zeigt, dass die Aktivierung einer Säure auch bei erhöhter Temperatur von 90 Grad C, bei der in Wassererhitzern häufig der Reinigungsprozess durchgeführt wird, ähnlich wirksam ist. Mit einer Lösung von 19 g Zitronensäure, aktiviert mit 11 g $AlCl_3 \cdot 6H_2O$ in 500 ml Wasser wurden 10 g Kesselsteingranulat in 10 Min. zu 96% gelöst. Dagegen erreichte Zitronensäure allein selbst bei ca. 50%iger Mehrkonzentration mit 30 g pro 500 ml Wasser ein schlechteres Ergebnis: in 10 Min. waren erst 70% gelöst. Mit einer ebenfalls erhöhten Konzentration von 24 g Aluminiumhexahytratchlorid wurden lediglich 7% des Kesselsteines in 10 Min. gelöst.

In Fig. 8 sind 2 Kurven gezeigt, die die geringe Reaktivität des Kesselsteingranulates mit dem Aluminiumhexahydratchlorid bei 20 Grad C und 90 Grad C wiedergeben. Es wurden 10 g Granulat bei ständigem Rühren in 500 ml einer Lösung von 0,1 Mol behandelt und die aufgelöste Menge Q in % über der Zeit t in Min. aufgetragen. So können zu den Angaben in den Fig. 2 bis 6 «praktisch keine Reaktion» für vergleichbare Zeiten der dort mit den aktivierten Säuren beschriebenen Reaktionen hier der Kurve in Fig. 8 zu T = 20 Grad C als Grenzwerte entnommen werden.

**Patentansprüche**

1. Verfahren zur Auflösung von einem im wesentlichen Kalziumkarbonat enthaltenden Niederschlages oder einer solchen Ablagerung, insbesondere von Kesselstein, durch eine Lewissäure in einer Konzentration von 10 bis 1000 mMol/l, der eine Protonensäure oder teildeprotonierte, mindestens ein Proton liefernde, weitere Säure, wobei diese Säure eine Dissoziationsstufe mit pk-Werten grösser 1 aufweist, zugesetzt ist, dadurch gekennzeichnet, dass diese weitere Säure in einem Molverhältnis der Säure zur Lewissäure von 2:1 bis 3:1 zugesetzt ist und die Lewissäure eine Lösung von mindestens einem Salz einer Säure mit Kationen eines 3-wertigen Hauptgruppenelementes oder eines 4-wertigen Hauptgruppenelementes oder eines Übergangselementes ist und als die weitere Säure eine oder mehrere anorganische Säuren, nämlich Borsäure oder Phosphorsäure oder deren teildeprotonierte Stufen, oder organische Säuren, nämlich Ameisensäure, Oxalsäure, Propionsäure, Glyconsäure, Glyoxylsäure, Milchsäure, Malonsäure, Maleinsäure, Bernsteinsäure, $L^+$ Weinsäure, Zitronensäure, Apfelsäure, Traubensäure, Zuckersäuren, wie Mono-Dicarbonsäuren von Triosen, Tetrosen, Pentosen, Hexosen, Heptosen oder deren biopolymere Formen, ausserdem Polyhydroxy-Polyaldehydepolycarbonsäuren, alpha-Aminocarbonsäuren, Polyaminopolycarbonsäuren, wie Nitrilotriessigsäure und teildeprotonierte Stufen in EDTA- oder DTPA-Stufen, 2-Phosphonbutan-1,2,4-Tricarbonsäure, 1-Hydroxyäthan-1,1-Diphosphonsäure in einer Gesamtkonzentration von 100 bis 500 mMol/l zugesetzt wird.

2. Verfahren nach Anspruch 1, dadurch gekennzeichnet, dass zur Auflösung von Ablagerungen an Aluminiumlegierungen eine Lösung eines Aluminiumsalzes, vorzugsweise Aluminiumchloridhydrat, und von einer oder mehreren der Säuren wie Zitronensäure, $L^+$ Weinsäure, Oxalsäure eingesetzt wird.

3. Verfahren nach Anspruch 1, dadurch gekennzeichnet, dass zur Auflösung von Ablagerungen an vorwiegend Eisen enthaltenen Legierungen eine Lösung eines 3-wertigen Eisensalzes, vorzugsweise von Eisendreichloridhydrat, und von einer oder mehreren Säuren, wie Zitronensäure, $L^+$ Weinsäure, Oxalsäure eingesetzt wird.

4. Mittel zur Auflösung von einem im wesentlichen Kalziumkarbonat enthaltenden Niederschlages oder einer solchen Ablagerung, insbesonders von Kesselstein, durch eine Lewissäure in einer Konzentration von 10 bis 1000 mMol/l, der eine Protonensäure oder teildeprotonierte, mindestens ein Proton liefernde, weitere Säure, wobei diese Säure eine Dissoziationsstufe mit pK-Werten grösser 1 aufweist, zugesetzt ist, dadurch gekennzeichnet, dass diese weitere Säure in einem Molverhältnis der Säure zur Lewissäure von 2:1 bis 3:1 zugesetzt ist und die Lewissäure eine Lösung von mindestens einem Salz einer Säure mit Kationen eines 3-wertigen Hauptgruppenelementes oder eines 4-wertigen Hauptgruppenelementes oder eines Übergangselementes ist und als die weitere Säure eine oder mehrere anorganische Säuren, nämlich Borsäure oder Phosphorsäure oder deren teildeprotonierte Stufen, oder organische Säuren, nämlich Ameisensäure, Oxalsäure, Propionsäure, Glyconsäure, Glyoxylsäure, Milchsäure, Malonsäure, Maleinsäure, Bernsteinsäure, $L^+$ Weinsäure, Zitronensäure, Apfelsäure, Traubensäure, Zuckersäuren, wie Mono-Dicarbonsäuren von Triosen, Tetrosen, Pentosen, Hexosen, Heptosen oder deren biopolymere Formen, ausserdem Polyhydroxy-Polyaldehydepolycarbonsäuren, alpha-Aminocarbonsäuren, Polyaminopolycarbonsäuren, wie Nitrilotriessigsäure und teildeprotonierte Stufen in EDTA- oder DTPA-Stufen, 2-Phosphonbutan-1,2,4-Tricarbonsäure, 1-Hydroxyäthan-1,1-Diphosphonsäure in einer Gesamtkonzentration von 100 bis 500 mMol/l zugesetzt wird.

5. Mittel nach Anspruch 4, dadurch gekennzeichnet, dass es in gelöster oder ungelöster Form Aluminium- oder Eisendreichloridhydrat und mindestens eine der Säuren, wie Zitronen-, $L^+$ Weinsäurehydrat oder Oxalsäure im Molverhältnis mit 1:2 oder 1:3 als wesentliche Bestandteile enthält.

6. Mittel nach einem der Ansprüche 4 oder 5, dadurch gekennzeichnet, dass die Lewissäure und die schwache oder mittelstarke Säure feste Form haben und das Mittel als Pulver oder Granulat oder in Kristall- oder Tablettenform vorliegt.

7. Mittel nach einem der Ansprüche 4 oder 5, dadurch gekennzeichnet, dass die Lewissäure mit der schwachen oder mittelstarken flüssigen Säure in Pastenform zubereitet ist.

**Claim**

1. Method of dissolving either a precipitate that contains essentially calcium carbonate or a deposite of that type, especially scale, by means of a Lewis acid in a concentration of 10 to 1000 mmoles/l, to which further is added a protonic acid or a partly deprotonated acid that yields at least one proton, whereby said acid having a dissociation stage with pk-values larger than 1, characterised in that said further acid is added with a molar ratio of said acid to the Lewis acid of 2:1 to 3:1, and that the Lewis acid is a solution of at least one salt of an acid either with cations of a 3-valence main-group element or with cations of a 4-valence main-group element or with cations of a transition element, and that said further acid added are one or several of inorganic acids, namely boric acid or phosphorous acid or of its partly deprotonated stages or of the following organic acids formic acid, oxalic acid, propionic acid, glycolic acid, glyoxylic acid, lactic acid, malonic acid, maleic acid, succinic acid, L+tartaric acid, citric acid, malic acid, racemic acid, sugar acids like monocarboxylic and dicarboxylic acids of triose, tetrose, pentose, hexose, and heptose and their biopolymeric forms, further polyhydroxy-polyaldehyde-polycarboxylic acids, alpha-amino-carboxylic acids, polyamino-polycarboxylic acids like nitrilo-triacetic acid and partly deprotonated stages in EDTA or DTPA stages, 2-phosphonobutane-1,2,4-tricarboxylic acid, 1-hydroxyethane-1,1 disphosphonic acid in a concentration amounting in total from 100 to 500 mmoles/l.

2. Method according to claim 1, characterized in that for dissolving deposits on aluminium alloys a solution consisting of an aluminium salt, preferably aluminium-chloride hydrate, and consisting of one or several of the following acids like citric acid, L+tartaric acid, oxialic acid is used.

3. Method according to claim 1, characterized in that for dissolving deposits on iron containing alloys a solution of a 3-valence iron salt, preferably iron-trichloride hydrate, and of one or several acids like citric acid, L+tartaric acid, oxialic acid is used.

4. Solvent for dissolving either a precipitate that contains essentially calcium carbonate or a deposite of that type, especially scale, by means of a Lewis acid in a concentration of 10 to 1000 mmoles/l, to which further is added a protonic acid or a partly deprotonated acid that yields at least one proton, whereby said acid having a dissociation stage with pk-values larger than 1, characterised in that said further acid is added with a molar ratio of said acid to the Lewis acid of 2:1 to 3:1, and that the Lewis acid is a solution of at least one salt of an acid either with cations of a 3-valence main-group element or with cations of a 4-valence main-group element or with cations of a transition element, and that said further acid added are one or several of inorganic acids, namely boric acid or phosphorous acid or of its partly deprotonated stages or of the following organic acids formic acid, oxialic acid, propionic acid, glycolic acid, glyoxylic acid, lactic acid, malonic acid, maleic acid, succinic acid, L+tartaric acid, citric acid, malic acid, racemic acid, sugar acids like monocarboxylic and dicarboxylic acids of triose, tetrose, pentose, hexose, and heptose and their biopolymeric forms, further polyhydroxy-polyaldehyde-polycarboxylic acids, alpha-amino-carboxylic acids, polyamino-polycarboxylic acids like nitrilo-triacetic acid and partly deprotonated stages in EDTA or DTPA stages, 2-phosphonobutane-1,2,4-tricarboxylic acid, 1-hydroxyethane-1,1-diphosphonic acid in a concentration amounting in total from 100 to 500 mmoles/l.

5. Solvent according to claim 4, characterized in that it contains essentially in dissolved or undissolved form aluminium-trichloride hydrate or iron-trichloride hydrate and at least one of the acids namely citric acid, L+tartaric acid or oxalic acid in a molar ratio of 1:2 or 1:3.

6. Solvent according to claim 4 or 5, characterized in that the Lewis acid and the weak or medium-strength acid is in solid form and the solvent is a powder, a granulate or the solvent has a crystal or a tablet form.

7. Solvent according to claim 4 or 5, characterized in that the Lewis-acid being prepared in conjunction with the weak or medium-strength liquid acid in the form of a paste.

**Revendications**

1. Procédé de dissolution d'une précipitation comprenant essentiellement du carbonate de calcium ou d'un dépôt tel, tout particulièrement de tartre, à l'aide d'un acide Lewis d'une concentration de 10 à 1000 mMol/l, auquel a été ajouté un acide protonique ou un autre acide partiellement déprotoné, fournissant au moins un proton, cet acide présentant un degré de dissociation à valeurs pk supérieures à 1, procédé caractérisé par le fait que cet autre acide est ajouté à l'acide Lewis dans des proportions de Mol de 2:1 à 3:1 par rapport à l'acide Lewis, et que l'acide Lewis est une solution d'au moins un sel d'un acide avec cations d'un élément de groupe principal trivalent ou d'un élément de groupe principal quadrivalent ou d'un élément de transition, et que, en tant qu'autre acide, on ajoute un ou plusieurs acides anorganiques, notamment acide borique ou acide phosphorique ou leurs phases partiellement déprotonées ou des acides organiques, notamment acide formique, acide oxalique, acide proponique, acide glycolique, acide glyoxylique, acide lactique, acide malonique, acide maléique, acide succinique, acide tartique L+, acide citrique, acide de pommes, acide de raisins, acide de sucre comme acides monodicarboniques de trioses, tétroses, pentoses, hexoses, heptoses ou de leurs formes biopolymères, en outre: acides polyhydroxy-polyaldehydepolycarboniques, acides alpha-aminocarboniques, acides polyaminopolycarboniques, comme acide nitrilotriacétique et leurs phases partiellement déprotonées en phases EDTA ou DTPA 2-phosphonobutane-1,2,4-acide tricarbonique, 1-hydroxyéthane-1,1-acide diphosphonique, ceci dans une concentration globale de 100 à 500 mMol/l.

2. Procédé selon spécification 1, caractérisé par le fait qu'une solution d'un sel d'aluminium, de préférence du chlorhydrat d'aluminium, et d'un ou plusieurs des acides, tels qu'acide citrique, acide tartrique L+, acide oxalyque est utilisée à la dissolution de sédimentations sur alliages d'aluminium.

3. Procédé selon spécification 1, caractérisé par le fait qu'une solution composée d'un sel ferreux trivalent, de préférence de chlorhydrate ferreux III, ou plusieurs acides, tels qu'acide citrique, acide tartrique L$^+$, acide oxalyque, est utilisée à la dissolution de sédimentations sur des alliages composés essentiellement de fer.

4. Moyen de dissolution d'une précipitation comprenant essentiellement du carbonate de calcium ou d'un tel dépôt, tout particulièrement de tartre, à l'aide d'un acide Lewis d'une concentration de 10 à 1000 mMol/l, auquel a été ajouté un acide protonique ou un autre acide partiellement déprotoné, fournissant au moins un proton, cet acide présentant un degré de dissociation à valeurs pk supérieures à 1, procédé caractérisé par le fait que cet autre acide est ajouté à l'acide Lewis dans des proportions de Mol de 2:1 à 3:1 par rapport à l'acide Lewis, et que l'acide Lewis est une solution d'au moins un sel d'un acide avec cations d'un élément de groupe principal trivalent ou d'un élément de groupe principal quadrivalent ou d'un élément de transition, et que, en tant qu'autre acide, on ajoute un ou plusieurs acides anorganiques, notamment acide borique ou acide phosphorique ou leurs phases partiellement déprotonées ou acides organiques, notamment acide formique, acide oxalique, acide propionique, acide glycolique, acide glyoxylique, acide lactique, acide malonique, acide maléique, acide succinique, acide tartique L$^+$,

acide citrique, acides de pommes, acide de raisins, acides de sucre comme acides monodicarboniques de trioses, tétroses, pentoses, hexoses, heptoses ou de leurs formes biopolymères, en outre: acides polyhydroxycarboniques-polyaldehydepolycarboniques, acides alpha-aminocarboniques, acides polyaminopolycarboniques, comme acide nitrilotriacétique et leurs phases partiellement déprotonées en phases EDTA ou DTPA 2-phosphonobutane-1,2,4-acide tricarbonique, 1-hydroxyéthane-1,1-acide diphosphonique, ceci dans une concentration globale de 100 à 500 mMol/l.

5. Medium selon spécification 4, caractérisé par le fait que celui-ci comprend en tant que composant essentiel du chlorhydrate d'aluminium ou de fer III dissous ou non dissous et au moins un des acides tels qu'acide citrique, hydrate d'acide tartrique L$^+$ ou acide oxalique, dans des rapports de moles de 1:2 ou 1:3.

6. Medium selon l'une des spécifications 4 ou 5, caractérisé par le fait que l'acide Lewis et l'acide faible ou moyen présentent une forme solide et que le medium se présente sous forme d'une poudre, d'un granulé, de cristaux ou de comprimés.

7. Medium selon l'une des spécifications 4 ou 5, caractérisé par le fait que l'acide Lewis est préparé sous forme de pâte avec l'acide faible ou moyen liquide.

Fig.1

Fig.8

**Fig. 2**

AKTIVIERUNG VON $H_3PO_4$ ,DURCH $Al^{3+}$ bzw. + Zitronensäure

| Säure | | Aktivator | | Molverhältnis Säure:Aktivator | Reaktionszeit tmax Min. | mittleres HCl-Säure äquivalent mMol |
|---|---|---|---|---|---|---|
| Verbind. | mMol | Verbind. | mMol | | | |
| --- | --- | $AlCl_3 \cdot 6H_2O$ | 80-100 | --- | praktisch keine Reaktion | --- |
| $H_3PO_4$ | 240 | $AlCl_3 \cdot 6H_2O$ | 80 | 3 : 1 | 135 – 140 | 290 |
| $H_3PO_4$ | 300 | --- | --- | --- | 150 | 270 |
| $H_3PO_4$ | 300 | $AlCl_3 \cdot 6H_2O$ | 100 | 3 : 1 | 60 – 70 | 310 |
| $H_3PO_4$ + Zitronensäure | 125/83,3 | --- | --- | --- | 310 | --- |
| $H_3PO_4$ + Zitronensäure | 125/83,3 | $AlCl_3 \cdot 6H_2O$ | 83,3 | (3 / 2): 1 | 90 | 290 |
| Zitronensäure | 83,3 | --- | --- | --- | langsame Reaktion viel weißer Niederschlag | --- |
| | | | | | | |

EP 0 200 776 B1

| Fig. 3 | | AKTIVIERUNG VON 2-PHOSPHONO-BUTAN-1,2,4-TRICARBONSÄURE DURCH $Al^{3+}$, $Fe^{3+}$ | | | | |
|---|---|---|---|---|---|---|
| Säure | | Aktivator | | Molverhältnis Säure:Aktivator | Reaktionszeit tmax Min. | mittleres HCl-Säure äquivalent mMol |
| Verbind. | mMol | Verbind. | mMol | | | |
| PBTC | 166,7 | --- | --- | --- | 300 | 200 |
| --- | --- | $AlCl_3 \cdot 6H_2O$ | 55 - 83 | --- | praktisch keine Reaktion | --- |
| | | $FeCl_3 \cdot 6H_2O$ | 55 - 83 | | | |
| PBTC | 166,7 | $AlCl_3 \cdot 6H_2O$ | 55,6 | 3 : 1 | 105 | 285 |
| PBTC | 166,7 | $AlCl_3 \cdot 6H_2O$ | 83,4 | 2 : 1 | 90 | 290 |
| PBTC | 166,7 | $FeCl_3 \cdot 6H_2O$ | 55,6 | 3 : 1 | 80 | 295 |
| PBTC | 166,7 | $FeCl_3 \cdot 6H_2O$ | 83,4 | 2 : 1 | 70 | 305 |
| | | | | | | |
| | | | | | | |

EP 0 200 776 B1

| Fig. 4 | AKTIVIERUNG VON L+WEINSÄURE DURCH $Al^{3+}$, $Fe^{3+}$ bzw. Oxalsäure | | | | | |
|---|---|---|---|---|---|---|
| Säure | | Aktivator | | Molverhältnis Säure:Aktivator | Reaktionszeit tmax Min. | mittleres HCl–Säure äquivalent mMol |
| Verbind. | mMol | Verbind. | mMol | | | |
| L+Weinsäure | 250 | --- | --- | --- | sehr langsame unvollständige Reaktion | --- |
| --- | --- | $AlCl_3 \cdot 6H_2O$ <br> $FeCl_3 \cdot 6H_2O$ | 83 - 125 <br> 83 - 125 | --- | praktisch keine Reaktion | --- |
| L+Weinsäure | 250 | $AlCl_3 \cdot 6H_2O$ | 83,33 | 3·: 1 | 110 | ca. 280 |
| L+Weinsäure | 250 | $AlCl_3 \cdot 6H_2O$ | 125 | 2 : 1 | 100 | ca. 290 |
| L+Weinsäure | 250 | $FeCl_3 \cdot 6H_2O$ | 83,33 | 3 : 1 | 200 | ca. 260 |
| L+Weinsäure | 250 | $FeCl_3 \cdot 6H_2O$ | 125 | 2 : 1 | 60 | ca. 320 |
| Oxalsäure | 250 | --- | --- | --- | praktisch keine Reaktion | --- |
| Oxalsäure | 250 | $FeCl_3 \cdot 6H_2O$ | 125 | 2 : 1 | 50 - 60 | 320 |

EP 0 200 776 B1

| Fig. 5 | | AKTIVIERUNG VON ZITRONENSÄURE DURCH Al$^{3+}$ bzw. Fe$^{3+}$ | | | | |
|---|---|---|---|---|---|---|
| Säure | | Aktivator | | Molverhältnis Säure:Aktivator | Reaktionszeit tmax Min. | mittleres HCl-Säure äquivalent mMol |
| Verbind. | mMol | Verbind. | mMol | | | |
| Zitronensäure | 166,7 | --- | --- | --- | langsame Reaktion viel weißer Niederschlag | --- |
| --- | --- | AlCl$_3$·6H$_2$O | 55 - 100 | --- | praktisch keine Reaktion | --- |
| Zitronensäure | 133,3 | AlCl$_3$·6H$_2$O | 66,7 | 2 : 1 | 125 | 280 |
| Zitronensäure | 166,7 | AlCl$_3$·6H$_2$O | 55,6 | 3 : 1 | 105-110 | 285 |
| Zitronensäure | 166,7 | AlCl$_3$·6H$_2$O | 83,4 | 2 : 1 | 105- 110 | 285 |
| Zitronensäure | 166,7 | FeCl$_3$·6H$_2$O | 55,6 | 3 : 1 | 95 | 285 |
| Zitronensäure | 166,7 | FeCl$_3$·6H$_2$O | 83,4 | 2 : 1 | 70 | 305 |
| --- | --- | FeCl$_3$·6H$_2$O | 83,4 | --- | Praktisch keine Reaktion | --- |

EP 0 200 776 B1

| Fig. 6 | | AKTIVIERUNG VON 1-HYDROXYÄTHAN-1,1-DIPHOSPHONSÄURE DURCH $Al^{3+}$, $Fe^{3+}$ | | | | |
|---|---|---|---|---|---|---|
| Säure | | Aktivator | | Molverhältnis Säure:Aktivator | Reaktionszeit tmax Min. | mittleres HCl-Säure äquivalent mMol |
| Verbind. | mMol | Verbind. | mMol | | | |
| HEDP | 166,7 | --- | --- | --- | langsame Reaktion,>500 weißer Niederschlag | --- |
| --- | --- | $AlCl_3 \cdot 6H_2O$ | 55 - 83 | --- | praktisch keine Reaktion | --- |
| | | $FeCl_3 \cdot 6H_2O$ | 55- 83 | ---- | | |
| HEDP | 166,7 | $AlCl_3 \cdot 6H_2O$ | 55,6 | 3 : 1 | 65 | 310 |
| HEDP | 166,7 | $AlCl_3 \cdot 6H_2O$ | 83,4 | 2 : 1 | 40 | 350 |
| HEDP | 166,7 | $FeCl_3 \cdot 6H_2O$ | 83,4 | 2 : 1 | 30 - 35 | 370 |
| | | | | | | |
| | | | | | | |
| | | | | | | |

EP 0 200 776 B1

**Fig. 7**        Korrosivitätsmessung an AlMg3

| Säure | | Aktivator | | Molverhältnis Säure:Aktivator | Korrosivität $^o$/oo | |
|---|---|---|---|---|---|---|
| Verbind. | mMol | Verbind. | mMol | | | |
| | | $AlCl_3 \cdot 6H_2O$ | 166 | | 0,27 | |
| Zitronensäure | 333 | | | | 1,87 | |
| Zitronensäure | 333 | $AlCl_3 \cdot 6H_2O$ | 166 | 3 : 2 | 1,26 | |
| HCl | 570 | | | | 59,9 | |
| | | | | | | |
| | | | | | | |
| | | | | | | |
| | | | | | | |

EP 0 200 776 B1